# EUROPÄISCHE PATENTSCHRIFT

(11) **EP 3 334 994 B1**
(45) Veröffentlichungstag und Bekanntmachung des Hinweises auf die Patenterteilung: **01.07.2020**
(21) Anmeldenummer: 16753584.8
(22) Anmeldetag: 09.08.2016
(51) Int. Cl.: F28F 9/18, F28F 21/08, F28D 7/02, F28D 7/16, B23K 26/20

(54) **VERFAHREN ZUM VERBINDEN VON ROHREN EINES ROHRBÜNDELWÄRMETAUSCHERS MIT EINEM ROHRBODEN DES ROHRBÜNDELWÄRMETAUSCHERS**
METHOD OF CONNECTING TUBES OF A TUBE BUNDLE HEAT-EXCHANGER WITH A TUBE BASE OF THE TUBE BUNDLE HEAT-EXCHANGER
PROCEDE DE RACCORDEMENT DE TUBES D'UN ECHANGEUR THERMIQUE A FAISCEAU TUBULAIRE A UNE PLAQUE TUBULAIRE D'UN ECHANGEUR THERMIQUE A FAISCEAU TUBULAIRE

(30) Priorität: 11.08.2015 EP 15002388
(43) Veröffentlichungstag der Anmeldung: 20.06.2018
(73) Patentinhaber: Linde GmbH, 82049 Pullach (DE)
(72) Erfinder: SCHOLZ, Jürgen, 81379 München (DE); WIMMER, Georg, 84577 Tüssling (DE)
(74) Vertreter: Meilinger, Claudia Sabine
(86) Internationale Anmeldenummer: PCT/EP2016/001362
(87) Internationale Veröffentlichungsnummer: WO 2017/025184

(56) Entgegenhaltungen:
- WO-A2-2011/008921
- DE-A1-102012 017 130
- DE-U1-202013 004 743

## Beschreibung

Die Erfindung betrifft ein Verfahren zum Verbinden von Rohren eines Rohrbündelwärmetauschers mit einem Rohrboden des Rohrbündelwärmetauschers.

### Stand der Technik

Rohrbündelwärmetauscher sind dazu eingerichtet, Wärme von einem ersten Fluid auf ein zweites Fluid zu übertragen. Zu diesem Zweck weist ein Rohrbündelwärmetauscher zumeist einen Hohlzylinder auf, in dessen Innerem eine Vielzahl von Rohren angeordnet ist. Eines der beiden Fluide kann durch die Rohre geleitet werden, das andere Fluid durch den Hohlzylinder, insbesondere um die Rohre herum. Die Rohre sind mit ihren Enden an Rohrböden des Rohrbündelwärmetauschers entlang ihres Umfangs befestigt.

Im Zuge des Herstellungsprozesses eines Rohrbündelwärmetauschers werden die Rohre mit ihren Enden beispielsweise stoffschlüssig mit den Rohrböden verbunden. Je nach Anzahl der Rohre werden dabei bis zu mehreren zehntausend Rohr-Rohrboden-Verbindungen hergestellt.

Es ist wünschenswert, eine Möglichkeit bereitzustellen, um Rohre eines Rohrbündelwärmetauschers mit einem Rohrboden des Rohrbündelwärmetauschers auf aufwandsarme und kostengünstige Weise in hoher Qualität miteinander zu verbinden.

WO 2011/008921 A2 bezieht sich auf ein Verfahren gemäss dem Oberbegriff des Patentanspruchs 1 zum Verbinden von Rohren eines Rohrbündelwärmetauschers mit einem Rohrboden des Rohrbündelwärmetauschers, wobei die Rohre und der Rohrboden jeweils aus Aluminium, Aluminiumlegierungen, Keramik, Stahllegierungen, Titanium, Titaniumlegierungen, wärmeleitenden Kunststoffen, oder wärmeleitenden Polymeren gebildet sein können. Die Rohre und der Rohrboden werden bevorzugt durch Reibschweißen miteinander verbunden.

DE 20 2013 004 743 U1 offenbart einen Wärmetauscher mit Kammersystem mit Kammerböden. Die Kammerböden bestehen aus gestanzten und umgeformten Blechteilen, in die kleine Leitungsbleche zur Wasserführung senkrecht eingeschweißt werden. Diese Kammerböden werden dann anschließend auf die Endrohre des Wärmetauschers gesetzt und mittels Laser verschweißt. Die glatten Schweißstellen (Stahl aus Stahl) sind stabiler und resistenter gegen aggressive Medien als gelötete Kupferverbindungen. Der Wärmetauscher ist zudem gegenüber einem Wärmetauscher mit Rohrbögen bei gleicher Höhe mit mehr Lamellen ausstattbar und damit leistungsfähiger.

### Offenbarung der Erfindung

Erfindungsgemäß wird ein Verfahren zum Verbinden von Rohren eines Rohrbündelwärmetauschers mit einem Rohrboden des Rohrbündelwärmetauschers mit den Merkmalen des Patentanspruchs 1 vorgeschlagen. Vorteilhafte Ausgestaltungen sind Gegenstand der Unteransprüche sowie der nachfolgenden Beschreibung.

Demnach wird ein Verfahren zum Verbinden von Rohren eines Rohrbündelwärmetauschers mit einem Rohrboden des Rohrbündelwärmetauschers bereitgestellt, wobei die Rohre und der zugehörige Rohrboden jeweils aus Aluminium oder einer Aluminium-Legierung gefertigt sind. Erfindungsgemäß werden die Rohre mittels Laserschweißens mit dem Rohrboden stoffschlüssig verbunden, wobei die Intensität des erzeugten Laserstrahls über 1 MW/cm² liegt.

Der herzustellende Rohrbündelwärmetauscher weist in seinem gefertigten, betriebsbereiten Zustand insbesondere eine Vielzahl von Rohren auf, die beispielsweise im Inneren eines Hohlzylinders angeordnet sein können. Der Rohrbündelwärmetauscher kann dabei mehrere hundert, mehrere tausend oder auch insbesondere mehrere zehntausend Rohre aufweisen. Weiterhin ist in dem gefertigten Rohrbündelwärmetauscher insbesondere mindestens ein Rohrboden vorgesehen, der beispielsweise als eine Platte ausgebildet sein kann. Die Rohre sind an ihren Enden entlang ihres Umfangs fest mit diesem Rohrboden bzw. mit diesen Rohrböden verbunden. Der Rohrboden weist insbesondere Bohrungen bzw. Löcher auf, welche in ihrem Durchmesser im Wesentlichen den Durchmessern der Rohre entsprechen.

Insbesondere ist jedes Rohr mit einem seiner Enden jeweils an einer dieser Bohrungen befestigt.

Die Rohre können innerhalb des Hohlzylinders beispielsweise geradlinig verlaufen (sog. Geradrohr-Wärmetauscher). In diesem Fall sind insbesondere zwei Rohrböden vorgesehen, welche an gegenüberliegenden Enden des Geradrohr-Wärmetauschers angeordnet sein können. Jedes Rohr ist mit jeweils einem seiner Enden dabei insbesondere an jeweils einem dieser zwei Rohrböden befestigt.

Die Rohre können innerhalb des Hohlzylinders beispielsweise auch U-förmig verlaufen (sog. U-Rohr-Wärmetauscher). Ein derartiger U-Rohr-Wärmetauscher kann nur einen Rohrboden aufweisen. Da die Rohre in diesem Fall U-förmig gebogen sind, können sie jeweils mit ihren beiden Enden an demselben Rohrboden befestigt werden. Es ist auch denkbar, zwei nebeneinander angeordnete Rohrböden zu verwenden.

Insbesondere sind die Rohre innerhalb des Hohlzylinders gewickelt (sog. gewickelter Rohrbündelwärmetauscher), d.h. die Rohre verlaufen insbesondere kreis- bzw. spiralförmig um eine Achse, insbesondere um eine Längsachse bzw. Hauptausdehnungsachse des Rohrbündelwärmetauschers. Insbesondere kann im Inneren des Hohlzylinders ein Kernrohr vorgesehen sein, um welches die Rohre kreis- bzw. spiralförmig herum angeordnet sind. Ein derartiger gewickelter Rohrbündelwärmetauscher weist insbesondere zwei an gegenüberliegenden Enden angeordnete Rohrböden auf.

Im Zuge der Herstellung des Rohrbündelwärmetauschers werden die Rohre innerhalb des Rohrbündelwärmetauschers angeordnet und wie gewünscht ausgerichtet. Daraufhin werden die Rohre mit dem Rohrboden bzw. mit den Rohrböden stoffschlüssig durch Laserschweißen verbunden. Im Zuge der Herstellung werden auf diese Weise insbesondere bis zu 25 000 Rohr-Rohrboden-Verbindungen mittels Laserschweißen hergestellt. Wenn alle Rohre mit dem Rohrboden stoffschlüssig verbunden wurden, kann ein Mantel um die Rohre herum angeordnet werden, welcher den Hohlzylinder bildet.

Als Laserschweißen oder Laserstrahlschweißen ist in diesem Zusammenhang insbesondere ein Prozess zu verstehen, wie er gemäß der DIN EN ISO 4063 ("Schweißen und verwandte Prozesse - Liste der Prozesse und Ordnungsnummern") als Prozess 52 definiert ist. Dabei wird durch einen Laserstrahl Energie in zu verbindende Werkstücke eingebracht.

Die Rohre und der Rohrboden des Rohrbündelwärmetauschers sind aus Aluminium oder einer Aluminium-Legierung gefertigt. Rohre und Rohrboden können aus demselben Material gefertigt sein oder auch aus unterschiedlichen Materialien. Insbesondere sind die Rohre aus einer ersten Aluminium-Legierung und der Rohrboden aus einer zweiten Aluminium-Legierung gefertigt.

Durch die Verwendung von Rohren und Rohrböden aus Aluminium oder einer Aluminium-Legierung ist der Rohrbündelwärmetauscher sehr viel leichter als ein herkömmlicher Rohrbündelwärmetauscher, welcher aus anderen Materialien gefertigt ist, beispielsweise aus Stahl bzw. Edelstahl oder Chrom-Nickel-Stahl. Der Rohrbündelwärmetauscher aus Aluminium oder einer Aluminium-Legierung weist somit eine um bis zu 50% geringere Masse auf als ein entsprechender Rohrbündelwärmetauscher, der z.B. aus Chrom-Nickel-Stahl gefertigt ist.

Für die Bearbeitung dieser Rohre und Rohrböden im Speziellen bzw. für die Bearbeitung von Werkstücken aus Aluminium oder einer Aluminium-Legierung im Allgemeinen gilt es zu beachten, dass Aluminium schnell mit Sauerstoff reagiert, wodurch sich Aluminiumoxid Al₂O₃ bildet. Die Rohre und Rohrböden aus Aluminium oder einer Aluminium-Legierung, welche im Zuge der Herstellung miteinander stoffschlüssig verbunden werden, werden im Folgenden der Einfachheit halber als Aluminiumwerkstücke bezeichnet.

Auf den zu bearbeitenden Aluminiumwerkstücken bildet sich somit eine Oxidschicht, welche für die Bearbeitung der Aluminiumwerkstücke insbesondere aufgebrochen bzw. aufgeschmolzen werden soll. Erst wenn diese Oxidschicht aufgebrochen wurde, kann ausreichend Energie in die Aluminiumwerkstücke eingebracht werden.

Diese Oxidschicht besitzt zumeist einen sehr viel höheren Schmelzpunkt als das darunterliegende Aluminiumwerkstück. Beispielsweise kann die Oxidschicht einen Schmelzpunkt zwischen 2 000°C und 2 100°C besitzen, insbesondere im Wesentlichen 2 050°C. Abhängig von der genauen Zusammensetzung kann das darunterliegende Aluminiumwerkstück hingegen einen Schmelzpunkt zwischen 500°C und 700°C, insbesondere zwischen 550°C und 660°C besitzen.

Herkömmliche Schweißverfahren, wie beispielsweise das Wolfram-Inertgasschweißen, eignen sich nur bedingt, um die Aluminiumwerkstücke miteinander zu verschweißen. Insbesondere das manuelle Wolfram-Inertgasschweißen von Aluminium oder Aluminium-Legierungen bedarf einer großen Handfertigkeit und viel Erfahrung des jeweiligen Schweißers. Eine Automatisierung des Wolfram-Inertgasschweißens der Aluminiumwerkstücke ist zumeist kaum möglich. Insbesondere wenn die Rohre des Rohrbündelwärmetauschers zueinander nur einen vergleichsweise geringen Abstand auf dem Rohrboden aufweisen und somit insbesondere ein Überschweißen benachbarter Nähte erforderlich ist, führt ein automatisiertes Wolfram-Inertgasschweißens kaum zu reproduzierbar akzeptablen Ergebnissen.

Durch das Laserschweißen können die Aluminiumwerkstücke auf besonders effektive, aufwandsarme und kostengünstige Weise miteinander verbunden werden. Durch das Laserschweißen kann die Oxidschicht auf den Aluminiumwerkstücken aufgebrochen und insbesondere komplett aufgeschmolzen werden, da beim Laserschweißen insbesondere eine vergleichsweise hohe Energiekonzentration durch den Laserstrahl erreicht werden kann. Es kann besonders effektiv Energie in die darunterliegenden Aluminiumwerkstücke eingebracht werden und die Aluminiumwerkstücke können wie gewünscht bearbeitet werden.

Für das stoffschlüssige Verbinden der Aluminiumwerkstücke bietet das Laserschweißen erhebliche Vorteile im Vergleich zu anderen Schweißverfahren. Mit anderen Schweißverfahren, beispielsweise dem Wolfram-Inertgasschweißen, ist es zumeist nicht möglich, die komplette Oxidschicht aufzuschmelzen. Nicht aufgeschmolzene Oxide der Oxidschicht aus einem Spalt zwischen Rohr und Rohrboden verbleiben dabei im Schweißgut, was als Oxidfahnen bezeichnet wird. Derartige Oxidfahnen stellen eine eindeutige Trennung bzw. Fehlstelle im Schweißgut und in der Schweißnaht dar. Durch das Laserschweißen kann die Entstehung derartiger Oxidfahnen verhindert werden und es kann eine saubere, reine Verbindung bzw. Schweißnaht zwischen Rohr und Rohrboden ohne derartige Fehlstellen erzeugt werden.

Derartige Probleme und Nachteile ergeben sich hingegen bei anderen Rohrbündelwärmetauschern überhaupt nicht, welche nicht aus Aluminium oder Aluminium-Legierungen gefertigt sind, sondern beispielsweise aus Stahl bzw. Edelstahl oder Chrom-Nickel-Stahl. Da sich bei derartigen Materialien keine Oxidschicht ausbildet, muss dieser Faktor bei der Herstellung eines entsprechenden Rohrbündelwärmetauschers nicht berücksichtigt werden. Durch die Erfindung wird eine Möglichkeit bereitgestellt, um die spezifischen Nachteile und Probleme, welche sich bei der Herstellung eines aus Aluminium oder aus Aluminium-Legierungen gefertigten Rohrbündelwärmetauschers ergeben, effektiv beheben zu können.

Durch das Laserschweißen der Rohr-Rohrboden-Verbindungen des aus Aluminium bzw. aus Aluminium-Legierungen gefertigten Rohrbündelwärmetauschers können darüber hinaus noch weitere Vorteile erzielt werden. Beim Laserschweißen kann eine vergleichsweise sehr hohe Schweißgeschwindigkeit erreicht werden, wodurch die Rohr-Rohrboden-Verbindungen besonders schnell und effizient hergestellt werden können. Weiterhin können mittels des Laserschweißens reproduzierbare Rohr-Rohrboden-Verbindungen mit gleichmäßiger Qualität hergestellt werden. Insbesondere können beim Laserschweißen vergleichsweise schmale Schweißnähte erzeugt werden, wodurch vermieden werden kann, dass sich Schweißnähte benachbarter Rohre beeinflussen.

Der vergleichsweise dicke Rohrboden (insbesondere im Vergleich zu den Wanddicken der Rohre) weist insbesondere eine vergleichsweise hohe Wärmeleitfähigkeit auf, so dass eingebrachte Wärme sehr schnell abgeleitet wird. Die vergleichsweise dünnen bzw. dünnwandigen Rohre weisen hingegen zweckmäßigerweise eine vergleichsweise geringe Wärmeleitfähigkeit auf, so dass eingebrachte Wärme nicht schnell abgeleitet werden kann. Durch das Laserschweißen kann ausreichend Energie in den Rohrboden eingebracht werden, um diesen trotz seiner vergleichsweise hohen Wärmeleitfähigkeit aufzuschmelzen. Dennoch kann gewährleistet werden, dass die Rohre nicht vorzeitig zurückgeschmolzen werden.

Das Laserschweißen der Aluminiumwerkstücke kann des Weiteren automatisiert durchgeführt werden. Wie weiter oben bereits erläutert, ist insbesondere ein Automatisieren des Wolfram-Inertgasschweißens der Aluminiumwerkstücke kaum möglich. Das Laserschweißen wird insbesondere mit einem präzise ausgerichteten, konzentrierten Laserstrahl durchgeführt, welcher auf einfache Weise verfahren und neupositioniert werden kann, insbesondere durch eine zweckmäßige automatisierte Steuerung. Das Laserschweißen und somit das Herstellen der Rohr-Rohrboden-Verbindung können auf einfache Weise automatisiert durchgeführt werden.

Die Rohre werden mittels Tiefschweißens mit dem Rohrboden stoffschlüssig verbunden. Das Tiefschweißen ist eine spezielle Ausführung des Laserschweißens. Beim Tiefschweißen liegt die Intensität des erzeugten Laserstrahls über einem vorbestimmten Grenzwert. Erfindungsgemäß liegt die Intensität des erzeugten Laserstrahls über 1 MW/cm², vorzugsweise über 2 MW/cm² oder 4 MW/cm². Der Aluminiumwerkstoff wird durch den Laserstrahl an der Schweißstelle aufgeschmolzen. Durch diese vergleichsweise hohe Intensität verdampft ein Teil des Aluminiumwerkstoffs, wodurch ein Metalldampf erzeugt wird. Durch weitere Absorption der Laserenergie wird dieser Metalldampf zumindest teilweise ionisiert, wodurch ein laserinduziertes Plasma bzw. Metalldampfplasma erzeugt wird. Durch die hohe Intensität des Laserstrahls bildet sich in der Schmelze weiterhin eine Schweißkapillare aus, welche auch als "keyhole" bezeichnet wird. Diese Schweißkapillare ist als ein Hohlraum ausgebildet, welcher mit dem Metalldampfplasma gefüllt ist. Da der Absorptionsgrad des Metalldampfplasmas insbesondere höher ist als der Absorptionsgrad der Schmelze, kann die Energie des Laserstrahls nahezu vollständig in das Aluminiumwerkstück eingebracht werden.

Gemäß einer bevorzugten Ausführungsform der Erfindung werden die Rohre des Rohrbündelwärmetauschers mit dem Rohrboden des Rohrbündelwärmetauschers vor dem Laserschweißen formschlüssig miteinander verbunden. Besonders bevorzugt wird dabei ein gewickelter Rohrbündelwärmetauscher hergestellt. Im Zuge des Herstellungsprozesses des Rohrbündelwärmetauschers, vorzugsweise des gewickelten Rohrbündelwärmetauschers, werden vorteilhafterweise folgende Schritte durchgeführt:
Bevorzugt wird ein erster Rohrboden an einem ersten Ende eines Kernrohrs des Rohrbündelwärmetauschers angeordnet. Ein zweiter Rohrboden wird vorzugsweise an einem zweiten Ende des Kernrohrs angeordnet. Die Rohrböden werden insbesondere an gegenüberliegenden Enden des Kernrohrs in Bezug auf dessen Längsachse bzw. Hautpausdehnungsachse angeordnet. Die Rohrböden können dabei radial beispielsweise über Stützarme oder auch stirnseitig befestigt sein.

Vorteilhafterweise werden die Rohre jeweils mit einem Ende in Bohrungen in dem ersten Rohrboden eingeführt bzw. eingefädelt, insbesondere gesteckt, und somit insbesondere mit dem ersten Rohrboden formschlüssig verbunden. Zweckmäßigerweise wird jeweils ein Rohr in jeweils eine Bohrung eingeführt. Die Rohre werden daraufhin vorzugsweise um das Kernrohr herum gewickelt. Das Kernrohr ist insbesondere drehbar gelagert, beispielsweise über Laufringe auf Rollenböcken. Die Rohre werden insbesondere spiralförmig unter Drehung des Kernrohres um dieses herumgewickelt. Die um das Kernrohr herum gewickelten Rohre werden jeweils mit ihrem anderen Ende in Bohrungen in dem zweiten Rohrboden eingeführt bzw. eingefädelt, insbesondere gesteckt, und auf diese Weise insbesondere mit dem zweiten Rohrboden formschlüssig verbunden. Diese Schritte können für jedes Rohr einzeln durchgeführt werden oder auch für eine zweckmäßige Anzahl von Rohren gleichzeitig.

Insbesondere werden die Rohre in unterschiedlichen Lagen aus jeweils einer bestimmten Anzahl von Rohren um das Kernrohr gewickelt. Vorzugsweise werden die Rohre derart auf das Kernrohr gewickelt, dass das Kernrohr die Last der Rohre trägt. Mittels Abstandshalter wird ein vorgegebener Abstand zwischen diesen einzelnen Lagen eingestellt. Somit wird gewährleistet, dass im gefertigten, betriebsbereiten Rohrbündelwärmetauscher ein Fluid durch diesen um die Rohre herum fließen kann. Um einen Bypass zwischen der äußersten Lage von Rohren und einem Mantel des Rohrbündelwärmetauschers zu vermeiden, kann um diese äußerste Lage von Rohren beispielsweise ein Blechmantel gewickelt werden.

Nachdem alle Rohre in gewünschter Weise um das Kernrohr gewickelt wurden, werden die Rohre an den Rohrböden befestigt. Zu diesem Zweck werden die Rohre mittels Laserschweißens mit dem ersten Rohrboden und mit dem zweiten Rohrboden stoffschlüssig verbunden. Nachdem alle Rohre mit den Rohrböden stoffschlüssig verbunden wurden, kann der Mantel um die Rohre herum angeordnet werden, welcher insbesondere einen Hohlzylinder bildet.

Vorzugsweise weisen die Rohre jeweils eine Wanddicke von maximal 2,0 mm auf. Der Rohrboden weist bevorzugt eine Dicke zwischen 100 mm und 200 mm auf. Bevorzugt sind die Rohre und/oder der Rohrboden jeweils aus einer Legierung aus Aluminium, Magnesium, Mangan, Silizium und/oder Kupfer gefertigt. Der Magnesium-Gehalt der Legierung kann dabei vorzugsweise zwischen 4,0% und 4,9% betragen, der Mangan-Gehalt bevorzugt zwischen 0,4% und 1,0%.

Beispielsweise können Rohre und/oder Rohrboden jeweils aus einer AlMgSiCu-Legierung gefertigt sein, beispielsweise aus der Aluminium Legierung 6061 mit einem Mangan-Gehalt von höchstens 0,15%, einem Magnesium-Gehalt zwischen 0,8% und 1,2%, einem Silizium-Gehalt zwischen 0,4% und 0,8% und einem Kupfer-Gehalt zwischen 0,15% und 0,4%.

Rohre und/oder Rohrboden können jeweils z.B. auch aus einer AlMgSi-Legierung gefertigt sein, beispielsweise aus der Aluminium Legierung 6063 mit einem Mangan-Gehalt von höchstens 0,1%, einem Magnesium-Gehalt zwischen 0,45% und 0,9%, einem Silizium-Gehalt zwischen 0,2% und 0,6% und einem Kupfer-Gehalt von höchstens 0,1%.

Es versteht sich, dass die Rohre und der Rohrboden dabei aus derselben Legierung gefertigt sein können oder dass die Legierungen der einzelnen Rohre und des Rohrbodens jeweils auch unterschiedlich sein können. Vorteilhafterweise weisen die Rohre und/oder der Rohrboden jeweils eine Wärmeleitfähigkeit zwischen 10 W/mK und 140 W/mK auf.

Vorzugsweise wird im Zuge des Laserschweißens ein Laserstrahl erzeugt und mittels optischer Elemente fokussiert. Der Laserstrahl kann dabei vorteilhafterweise durch einen Faserlaser, einen Diodenlaser oder auch durch einen Festkörperlaser, vorzugsweise durch einen Kohlendioxidlaser oder einen Nd:YAG-Laser, erzeugt werden. Die optischen Elemente bilden eine Fokussieroptik, mittels welcher der Laserstrahl präzise auf die zu schweißende Stelle fokussiert werden kann. Vorzugsweise kann das Laserschweißen auch mit Doppeltfokus durchgeführt werden. In diesem Fall wird der Laserstrahl in zwei Laserstrahlen unterteilt, beispielsweise durch einen Umlenkspiegel in der Fokussieroptik. Der Laserstrahl kann vorzugsweise mittels Lichtwellenleiters, insbesondere mittels eines Glasfaserkabels geführt werden. Vorteilhafterweise kann im Zuge des Laserschweißens ein Zusatzwerkstoff zugeführt werden. Bevorzugt auch ein Schutzgas bzw. Prozessgas zugeführt werden, vorzugsweise Argon, Helium, Stickstoff, Kohlendioxid, Sauerstoff oder einer Mischung aus diesen genannten Gasen. Das Laserschweißen kann zweckmäßigerweise aber auch ohne Zufuhr von Schutzgas und/oder Zusatzwerkstoff durchgeführt werden.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausgestaltung eines Rohrbündelwärmetauschers, der mittels einer bevorzugten Ausführungsform eines erfindungsgemäßen Verfahrens gefertigt wurde.
- Figur 2: zeigt schematisch eine weitere bevorzugte Ausgestaltung eines Rohrbündelwärmetauschers, der mittels einer bevorzugten Ausführungsform eines erfindungsgemäßen Verfahrens gefertigt wurde.
- Figur 3: zeigt schematisch eine Vorrichtung, die dazu eingerichtet ist, eine bevorzugte Ausführungsform eines erfindungsgemäßen Verfahrens durchzuführen.

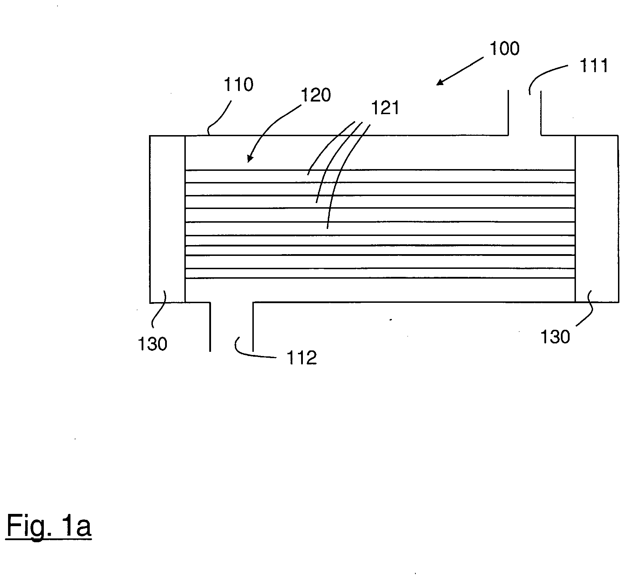

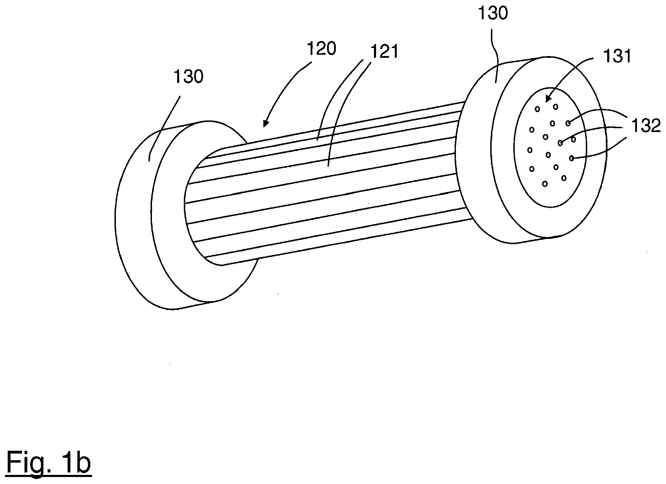

In Figur 1 ist eine bevorzugte Ausgestaltung eines Rohrbündelwärmetauschers schematisch dargestellt und mit 100 bezeichnet. In Figur 1a ist der Rohrbündelwärmetauscher 100 in einer Schnittansicht dargestellt. Der Rohrbündelwärmetauscher 100 ist in diesem Beispiel als ein Geradrohr-Wärmetauscher ausgebildet.

Der Geradrohr-Wärmetauscher 100 weist einen Mantel 110 auf, der einen Fluid-Eingang 111 und einen Fluid-Ausgang 112 aufweist, um ein erstes Fluid durch den Mantel 110 zu leiten.

Innerhalb des Mantels 110 ist ein Rohrbündel 120 aus einer Vielzahl von geradlinig verlaufenden Rohren 121 angeordnet. Durch die Rohre kann ein zweites Fluid geleitet werden. Die einzelnen Rohre 121 sind an Rohrböden 130 des Geradrohr-Wärmetauschers 100 stoffschlüssig verbunden. Die Rohrböden 130 können beispielsweise an den Enden des Mantels 110 befestigt sein.

Der Geradrohr-Wärmetauscher 100, die Rohre 121 und die Rohrböden 130, sind aus einer Aluminium-Legierung gefertigt, insbesondere aus einer Aluminium-Magnesium-Mangan-Legierung. Beispielsweise sind die Rohre 120 und die Rohrböden 130 aus dem Werkstoff EN AW-5083 bzw. EN AW-AlMg4,5Mn0,7 mit der Werkstoff Nummer DIN 3.3547 gefertigt, also aus einer Aluminium-Legierung mit einem Mangan-Anteil zwischen 0,4% und 1,0% und mit einem Magnesium-Anteil zwischen 4,0% und 4,9%.

In Figur 1b ist ein Teil des Geradrohr-Wärmetauschers 100 aus Figur 1a in einer perspektivischen Ansicht dargestellt. In Figur 1b sind nur das Rohrbündel 120 und die Rohrböden 130 dargestellt.

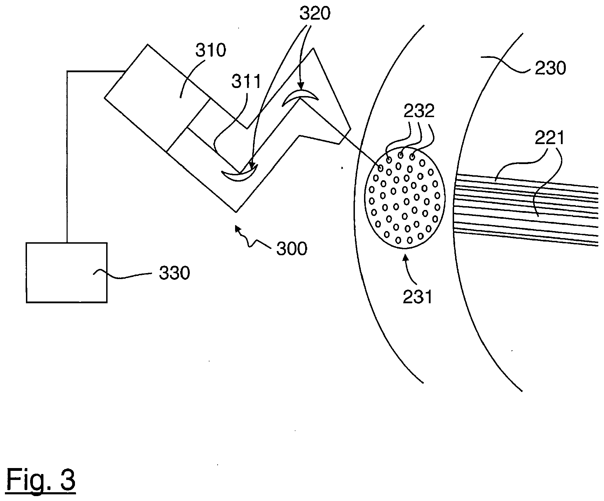

Wie in Figur 1b zu erkennen ist, weisen die Rohrböden 130 Bohrungen 132 auf. Diese Bohrungen 132 sind in einem Bohrungsbereich 131 des jeweiligen Rohrbodens 130 angeordnet. Jedes der Rohre 121 des Rohrbündels 120 ist an einer dieser Bohrungen 132 stoffschlüssig mit dem jeweiligen Rohrboden 130 verbunden. Im Zuge eines Herstellungsprozesses werden diese stoffschlüssigen Rohr-Rohrboden-Verbindungen mittels Laserschweißen hergestellt, wie weiter unten in Bezug auf Figur 3 ausführlich beschrieben wird.

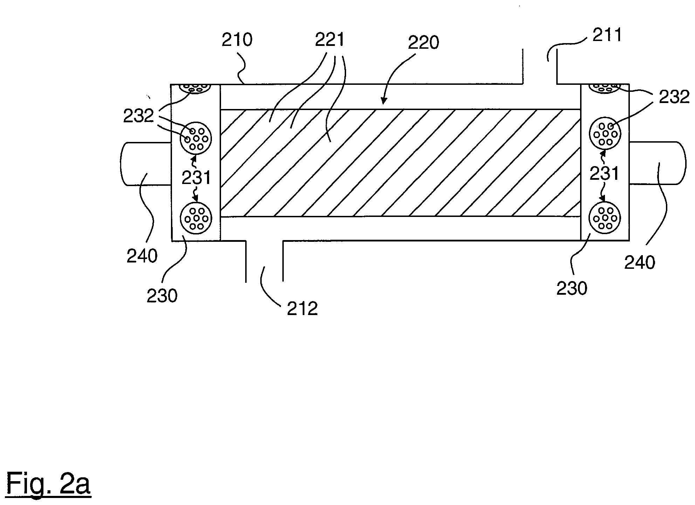

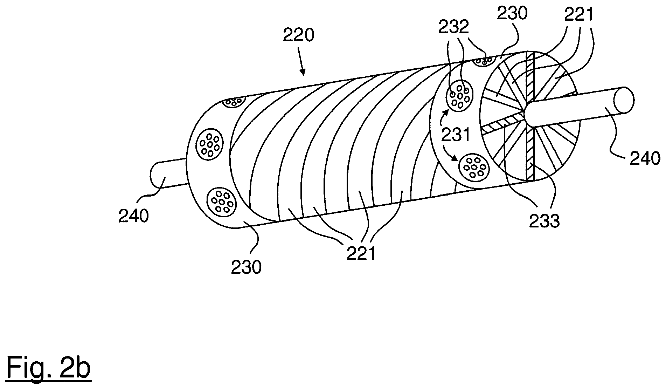

In Figur 2 ist eine weitere bevorzugte Ausgestaltung eines Rohrbündelwärmetauschers schematisch dargestellt und mit 200 bezeichnet. In Figur 2a ist der Rohrbündelwärmetauscher 200 analog zu Figur 2a in einer Schnittansicht dargestellt.

Der Rohrbündelwärmetauscher 200 ist beispielsweise als gewickelter Rohrbündelwärmetauscher ausgebildet.

Analog zu dem Geradrohr-Wärmetauscher 100 aus Figur 1 weist auch der gewickelte Rohrbündelwärmetauscher 200 einen Mantel 210 mit einem Fluid-Eingang 211 und einem Fluid-Ausgang 212 auf, in dessen Inneren ein Rohrbündel 220 aus einer Vielzahl von Rohren 221 angeordnet ist.

Im Gegensatz zu dem Geradrohr-Wärmetauscher 100 verlaufen die Rohre 210 des gewickelten Rohrbündelwärmetauschers 200 nicht geradlinig, sondern sind spiralförmig um ein Kernrohr 240 gewickelt. Rohrböden 230 des gewickelten Rohrbündelwärmetauschers 200 weisen entlang ihres Umfangs Bohrungsbereiche 231 mit Bohrungen 232 auf, wobei jedes der Rohre 221 des Rohrbündels 220 an einer dieser Bohrungen 232 stoffschlüssig mit dem jeweiligen Rohrboden 230 verbunden ist.

Auch die Rohre 221 und Rohrböden 230 sind bevorzugt aus einer Aluminium-Legierung gefertigt, beispielsweise aus dem Werkstoff EN AW-5083 bzw. EN AW-AlMg4,5Mn0,7.

In Figur 2b ist ein Teil des gewickelten Rohrbündelwärmetauschers 200 (das Rohrbündel 220, die Rohrböden 230 und das Kernrohr 240) aus Figur 2a in einer perspektivischen Ansicht dargestellt. Wie in Figur 2b zu erkennen ist, sind die Rohrböden 230 beispielsweise über Stützarme 233 an dem Kernrohr 240 befestigt.

In Figur 3 ist eine Vorrichtung schematisch dargestellt, die dazu eingerichtet ist, eine bevorzugte Ausführungsform eines erfindungsgemäßen Verfahrens durchzuführen.

In Figur 3 ist beispielhaft dargestellt, wie mit dieser Vorrichtung die Rohre 221 mit einem der Rohrböden 230 des gewickelten Rohrbündelwärmetauschers 200 gemäß Figur 2 im Zuge eines Herstellungsprozesses stoffschlüssig verbunden werden.

Die Vorrichtung umfasst ein Laserschweißgerät 300. Ein Laser 310, beispielsweise ein Nd:YAG-Laser, erzeugt einen Laserstrahl 311, der mittels einer Fokussieroptik 320 aus zweckmäßigen optischen Elementen auf eine zu schweißende Stelle auf dem Rohrboden 230 fokussiert werden kann. Beispielsweise kann die Fokussieroptik 320 Hohlspiegel aufweisen, welche den Laserstrahl 311 auf die zu schweißende Stelle fokussieren.

Ein Steuergerät 330 ist dazu eingerichtet, den Laser 310 und die Fokussieroptik 320 anzusteuern, insbesondere um den Laserstrahl 311 zu verfahren und auf dem Rohrboden neu zu positionieren und neu zu fokussieren. Mit dem Steuergerät 330 ist eine automatisierte Steuerung des Laserschweißens realisiert und es wird eine automatisierte Herstellung der Rohr-Rohrboden-Verbindungen ermöglicht.

Es versteht sich, dass die Vorrichtung auf analoge Weise auch zum Herstellen der stoffschlüssigen Verbindung zwischen den Rohren 121 mit den Rohrböden 130 des Geradrohr-Wärmetauscher 100 gemäß Figur 1 verwendet werden kann, bzw. allgemein zum Herstellen einer stoffschlüssigen Verbindung zwischen Rohren und Rohrböden eines anderen Rohrbündelwärmetauschers.

### Bezuaszeichenliste

- 100: Rohrbündelwärmetauscher, Geradrohr-Wärmetauscher
- 110: Mantel
- 111: Fluid-Eingang
- 112: Fluid-Ausgang
- 120: Rohrbündel
- 121: Rohre
- 130: Rohrböden
- 131: Bohrungsbereich
- 132: Bohrungen

- 200: Rohrbündelwärmetauscher, gewickelte Rohrbündelwärmetauscher
- 210: Mantel
- 211: Fluid-Eingang
- 212: Fluid-Ausgang
- 220: Rohrbündel
- 221: Rohre
- 230: Rohrböden
- 231: Bohrungsbereich
- 232: Bohrungen
- 233: Stützarme
- 240: Kernrohr

- 300: Laserschweißgerät
- 310: Laser, Nd:YAG-Laser
- 311: Laserstrahl
- 320: Fokussieroptik
- 330: Steuergerät

## Patentansprüche

1. Verfahren zum Verbinden von Rohren (121, 221) eines Rohrbündelwärmetauschers (100, 200) mit einem Rohrboden (130, 230) des Rohrbündelwärmetauschers (100, 200),
- wobei die Rohre (121, 221) und der Rohrboden (130, 230) jeweils aus Aluminium oder einer Aluminium-Legierung gefertigt sind,
**dadurch gekennzeichnet, dass**
- die Rohre (121, 221) mittels Laserschweißens mit dem Rohrboden (130, 230) stoffschlüssig verbunden werden, und
- wobei die Intensität des erzeugten Laserstrahls über 1 MW/cm² liegt.

2. Verfahren nach Anspruch 1, wobei Intensität des erzeugten Laserstrahls über 2 MW/cm², insbesondere über 4 MW/cm², liegt.

3. Verfahren nach Anspruch 1 oder 2, wobei die Rohre (121, 221) des Rohrbündelwärmetauschers (100, 200) mit dem Rohrboden (130, 230) des Rohrbündelwärmetauschers (100, 200) vor dem Laserschweißen formschlüssig verbunden werden.

4. Verfahren nach Anspruch 3, wobei
- ein erster Rohrboden (230) an einem ersten Ende eines Kernrohrs (240) des Rohrbündelwärmetauschers (200) angeordnet wird und wobei ein zweiter Rohrboden (230) an einem zweiten Ende des Kernrohrs (240) angeordnet wird,
- die Rohre (221) jeweils mit ihrem einen Ende in Bohrungen (232) in dem ersten Rohrboden (230) eingeführt werden,
- die Rohre (221) um das Kernrohr (240) herum gewickelt werden,
- die um das Kernrohr (240) herum gewickelten Rohre (221) jeweils mit ihrem anderen Ende in Bohrungen (232) in dem zweiten Rohrboden (230) eingeführt werden und anschließend
- die Rohre (221) mittels Laserschweißens mit dem ersten Rohrboden (230) und mit dem zweiten Rohrboden (230) stoffschlüssig verbunden werden.

5. Verfahren nach einem der vorstehenden Ansprüche, wobei die Rohre (121, 221) jeweils eine Wanddicke von maximal 2,0 mm aufweisen und wobei der Rohrboden (130, 230) eine Dicke zwischen 100 mm und 200 mm aufweist.

6. Verfahren nach einem der vorstehenden Ansprüche, wobei die Rohre (121, 221) und/oder der Rohrboden (130, 230) jeweils eine Wärmeleitfähigkeit zwischen 10 W/mK und 140 W/mK aufweisen.

7. Verfahren nach einem der vorstehenden Ansprüche, wobei die Rohre (121, 221) und/oder der Rohrboden (130, 230) jeweils aus einer Legierung aus Aluminium, Magnesium, Mangan, Silizium und/oder Kupfer gefertigt sind.

8. Verfahren nach einem der vorstehenden Ansprüche, wobei im Zuge des Laserschweißens ein Laserstrahl (311) erzeugt und mittels optischer Elemente (320) fokussiert wird.

9. Verfahren nach Anspruch 8, wobei der Laserstrahl (311) mittels eines Lichtwellenleiters, insbesondere mittels eines Glasfaserkabels, geführt wird.

10. Verfahren nach Anspruch 8 oder 9, wobei der Laserstrahl (311) durch einen Faserlaser, einen Diodenlaser oder einen Festkörperlaser (310), insbesondere durch einen Kohlendioxidlaser oder einen Nd:YAG-Laser, erzeugt wird.

## Claims

1. Method for connecting tubes (121, 221) of a tube bundle heat exchanger (100, 200) to a tube base (130, 230) of the tube bundle heat exchanger (100, 200),
- wherein the tubes (121, 221) and the tube base (130, 230) are respectively made of aluminum or an aluminum alloy,
**characterized in that**
- the tubes (121, 221) are materially connected to the tube base (130, 230) by means of laser welding, and
- wherein the intensity of the generated laser beam is greater than 1 MW/cm².

2. Method according to claim 1, wherein the intensity of the generated laser beam is greater than 2 MW/cm², in particular greater than 4 MW/cm².

3. Method according to claim 1 or 2, wherein the tubes (121, 221) of the tube bundle heat exchanger (100, 200) are connected in a positive-locking manner to the tube base (130, 230) of the tube bundle heat exchanger (100, 200) prior to the laser welding.

4. Method according to claim 3, wherein
- a first tube base (230) is arranged at a first end of a core tube (240) of the tube bundle heat exchanger (200), and wherein a second tube base (230) is arranged at a second end of the core tube (240),
- the tubes (221) are respectively inserted with their one end into bores (232) in the first tube base (230),
- the tubes (221) are wound around the core tube (240),
- the tubes (221) wound around the core tube (240) are respectively inserted with their other end into bores (232) in the second tube base (230), and then
- the tubes (221) are then materially connected to the first tube base (230) and to the second tube base (230) by means of laser welding.

5. Method according to any of the preceding claims, wherein the tubes (121, 221) respectively have a wall thickness of at most 2.0 mm, and wherein the tube base (130, 230) has a thickness of between 100 mm and 200 mm.

6. Method according to any of the preceding claims, wherein the tubes (121, 221) and/or the tube base (130, 230) respectively have a thermal conductivity of between 10 W/mK and 140 W/mK.

7. Method according to any of the preceding claims, wherein the tubes (121, 221) and/or the tube base (130, 230) are respectively made of an alloy of aluminum, magnesium, manganese, silicon, and/or copper.

8. Method according to any of the preceding claims, wherein, in the course of laser welding, a laser beam (311) is generated and is focused by means of optical elements (320).

9. Method according to claim 8, wherein the laser beam (311) is guided by means of an optical waveguide, in particular by means of a fiber optic cable.

10. Method according to claim 8 or 9, wherein the laser beam (311) is generated by a fiber laser, a diode laser, or a solid-state laser (310), in particular by a carbon dioxide laser or an Nd:YAG laser.

## Revendications

1. Procédé de raccordement de tubes (121, 221) d'un échangeur thermique à faisceau tubulaire (100, 200) à une plaque tubulaire (130, 230) d'un échangeur thermique à faisceau tubulaire (100, 200),
- les tubes (121, 221) et la plaque tubulaire (130, 230) étant chacun fabriqués à partir d'aluminium ou d'un alliage d'aluminium,
**caractérisé en ce que**
- les tubes (121, 221) sont reliés à la plaque tubulaire (130, 230) par liaison de matière par soudage laser et
- l'intensité du rayon laser généré étant supérieure à 1 MW/cm²

2. Procédé selon la revendication 1, l'intensité du rayon laser généré étant supérieure à 2 MW/cm², en particulier supérieure à 4 MW/cm².

3. Procédé selon la revendication 1 ou 2, les tubes (121, 221) de l'échangeur thermique à faisceau tubulaire (100, 200) étant reliés avant le soudage laser par complémentarité de formes à la plaque tubulaire (130, 230) de l'échangeur thermique à faisceau tubulaire (100, 200).

4. Procédé selon la revendication 3,
- une première plaque tubulaire (230) étant disposée au niveau d'une première extrémité d'un tube central (240) de l'échangeur thermique à faisceau tubulaire (200) et une deuxième plaque tubulaire (230) étant disposée au niveau d'une deuxième extrémité du tube central (240),
- les tubes (221) étant chacun introduits à l'aide d'une de leurs extrémités dans des trous (232) dans la première plaque tubulaire (230),
- les tubes (221) étant enroulés autour du tube central (240),
- les tubes (221) enroulés autour du tube central (240) étant chacun introduits à l'aide de leur autre extrémité dans des trous (232) de la deuxième plaque tubulaire (230), puis
- les tubes (221) étant reliés par liaison de matière par soudage laser à la première plaque tubulaire (230) et à la deuxième plaque tubulaire (230).

5. Procédé selon l'une quelconque des revendications précédentes, les tubes (121, 221) présentant chacun une épaisseur de paroi d'au maximum 2,0 mm et la plaque tubulaire (130, 230) présentant une épaisseur comprise entre 100 mm et 200 mm.

6. Procédé selon l'une quelconque des revendications précédentes, les tubes (121, 221) et/ou la plaque tubulaire (130, 230) présentant chacun une conductivité thermique comprise entre 10 W/mK et 140 W/mK.

7. Procédé selon l'une quelconque des revendications précédentes, les tubes (121, 221) et/ou la plaque tubulaire (130, 230) étant chacun fabriqués à partir d'un alliage d'aluminium, de magnésium, de manganèse, de silicium et/ou de cuivre.

8. Procédé selon l'une quelconque des revendications précédentes, un rayon laser (311) étant généré et focalisé au moyen d'éléments optiques (320) au cours du soudage laser.

9. Procédé selon la revendication 8, le rayon laser (311) étant guidé au moyen d'un guide d'ondes optiques, en particulier au moyen d'un câble à fibres optiques.

10. Procédé selon la revendication 8 ou 9, le rayon laser (311) étant généré par un laser à fibre, un laser à diode ou un laser à solide (310), en particulier par un laser au dioxyde de carbone ou un laser Nd:YAG.
